# EUROPÄISCHE PATENTSCHRIFT

(11) **EP 3 792 459 B1**
(45) Veröffentlichungstag und Bekanntmachung des Hinweises auf die Patenterteilung: **07.06.2023**
(21) Anmeldenummer: 20195399.9
(22) Anmeldetag: 10.09.2020
(51) Int. Cl.: F01N 3/027, F01N 3/20, F01N 3/28

(54) **INDUKTIV HEIZBARER KERAMIKKÖRPER, VERFAHREN ZUR HERSTELLUNG EINES KERAMIKKÖRPERS, ABGASREINIGUNGSEINRICHTUNG SOWIE FAHRZEUG**
INDUCTIVELY HEATABLE CERAMIC BODY, METHOD FOR MANUFACTURING A CERAMIC BODY, EXHAUST GAS PURIFICATION DEVICE AND VEHICLE
CORPS EN CÉRAMIQUE À CHAUFFAGE INDUCTIF, PROCÉDÉ DE FABRICATION D'UN CORPS EN CÉRAMIQUE, DISPOSITIF DE PURIFICATION DES GAZ D'ÉCHAPPEMENT AINSI QUE VÉHICULE

(30) Priorität: 10.09.2019 DE 102019124239
(43) Veröffentlichungstag der Anmeldung: 17.03.2021
(73) Patentinhaber: VOLKSWAGEN AG, 38440 Wolfsburg (DE)
(72) Erfinder: Pott, Ekkehard, 38518 Gifhorn (DE)
(74) Vertreter: Gulde & Partner

(56) Entgegenhaltungen:
- EP-A1- 3 431 179
- US-A1- 2019 160 429

## Beschreibung

Die Erfindung betrifft einen Keramikkörper, ein Verfahren zur Herstellung eines Keramikkörpers,eine Abgasreinigungseinrichtung sowie ein Fahrzeug, einen Verbrennungsmotor aufweisend.

Abgase stöchiometrisch betriebener Verbrennungsmotoren werden in der Regel katalytisch gereinigt, um beispielsweise Kohlenwasserstoffe, Stickoxide und Kohlenstoffmonoxid zu reduzieren. Neben diesen gasförmigen Stoffen wird aber auch Ruß bei der Verbrennung erzeugt, der durch dem Verbrennungsmotor nachgeordnete Partikelfilter reduziert werden kann.

Ein Partikelfilter basiert üblicherweise auf einem mit Kanälen in Strömungsrichtung versehenen Filterkörper, der aus Keramik gefertigt sein kann, wobei die Kanäle wechselseitig verschlossen sein können und die Kanalwände eine vorbestimmte Porosität aufweisen. Durch den wechselseitigen Verschluss der Kanäle wird ein Wanddurchtritt des den Filterkörper durchströmenden Abgases erzwungen, wodurch im Abgas befindliche Partikel aus dem Abgas herausgefiltert werden. Die Kanalwände können zudem mit einer Beschichtung versehen sein, die ein edelmetallhaltiges Katalysatormaterial zur weiteren Abgasbehandlung enthält. Die katalytisch wirksame Beschichtung wird als ein sogenannter "Washcoat" aufgetragen.

Um einen Partikelfilter mit einer gewissen Rußbeladung zu regenerieren, wird dieser auf eine definierte Temperatur gebracht, sodass der eingelagerte Ruß zu Kohlenstoffdioxid verbrennt. Zudem erfordern hohe Konvertierungsraten von Katalysatoren bestimmte Temperaturen, bei denen diese betrieben werden. Mit dem Bestreben, den CO₂-Ausstoß bei Fahrzeugen immer weiter zu senken, ist jedoch verbunden, dass immer weniger Wärmeenergie in der Abgasanlage zur Verfügung steht, sodass Maßnahmen zur gezielten Temperierung von Komponenten der Abgasreinigungsanlage eines Fahrzeuges zu treffen sind. Dies ist insbesondere bei einem Kaltstart eines Verbrennungsmotors relevant, bei dem die Katalysatoren und Filter möglichst schnell auf Betriebstemperatur gebracht werden sollen.

Um einen Katalysator mit einem keramischen Filterkörper schnell auf Betriebstemperatur bringen zu können, wird in EP 3 027 315 B1 und EP 3 431 179 A1 vorgeschlagen, in den Durchgängen des Filterkörpers separate Metallkörper einzubringen, die mittels elektromagnetischer Felder induktiv geheizt werden können. Jedoch reduziert sich dadurch die durchströmbare Querschnittsfläche der Kanäle, sodass sich die Katalysatorleistung reduziert oder durch eine Vergrößerung des Filterkörpers kompensiert werden muss.

Aus der US 2019 / 160 429 A1 ist eine Anordnung zur Behandlung gasförmiger Emissionen mit einem Substrat bekannt, dessen Zellen für den Durchgang von Emissionsgas sich entlang des Substrats erstrecken. In einem Satz der Zellen befinden sich leitende Drähte und eine Induktionsheizspule, um ein variierendes elektromagnetisches Feld zu erzeugen, um die Drähte induktiv zu erwärmen. Der Substratkörper hat eine Front für den Eintritt von fließenden, zu behandelnden Emissionsgases in den Substratkörper und eine Rückseite für den Austritt von behandeltem gasförmigen Emissionsgas. Die Drähte haben Vorsprünge, die sich von der Vorderseite und/oder der Rückseite des Substratkörpers abheben, so dass die Drahtteile im Substratkörper bei induktiver Erwärmung das umgebende Substrat und die Drahtvorsprünge das strömende Emissionsgas direkt erwärmen.

Der Erfindung liegt daher die Aufgabe zugrunde, einen Keramikkörper für einen Partikelfilter und/oder als Katalysatorträger bereitzustellen, mit dem ein schnelles Aufheizen möglich ist und gleichzeitig die durchströmbare Querschnittsfläche gegenüber dem Stand der Technik nicht die Leistungsfähigkeit des Keramikkörpers beeinträchtigend reduziert werden muss.

Die Aufgabe wird durch einen Keramikkörper, ein Herstellungsverfahren für den Keramikkörper, eine Abgasreinigungseinrichtung, den Keramikkörper aufweisend, und ein Fahrzeug mit den Merkmalen der unabhängigen Ansprüche gelöst.

Vorteilhafte Ausgestaltungen sind in den Unteransprüchen gekennzeichnet.

Erfindungsgemäß wird ein Keramikkörper gemäß Anspruch 1 bereitgestellt, der über eine Vielzahl von parallel angeordneten Kanälen und eine Vielzahl von parallel zu den Kanälen angeordnete langgestreckte Metallelemente zur induktiven Erhitzung verfügt, wobei die langgetreckten Metallelemente in den Wandungen des Keramikkörpers angeordnet sind.

Derartige Keramikkörper ohne die erfindungsgemäße Ausgestaltung sind aus dem Stand der Technik als Wabenstruktur- oder Partikelfilterkeramikkörper bekannt.

Der erfindungsgemäße Keramikkörper kann als Katalysatorträger und/oder Partikelfilter ausgebildet sein. Somit kann der Keramikkörper eine katalytisch wirksame Beschichtung aufweisen.

Vorteilhafterweise ist der erfindungsgemäße Keramikkörper geeignet, ein schnelles Aufheizen auf die Betriebstemperatur einer Abgasreinigungsanlage zu gewährleisten und zudem die erforderliche Temperatur, beispielsweise zur Regeneration bei Ausgestaltung als Partikelfilter, bereitzustellen.

Die erfindungsgemäß im Keramikkörper verwendeten Metallelemente sind ferromagnetisch, um zur induktiven Heizung geeignet zu sein.

Die Metallelemente sind vorzugsweise in den Wandungen beabstandet voneinander eingebracht, um einen möglichst gleichmäßigen Wärmeintrag zu bewirken und um einen möglichst hohen Bedeckungsgrad der Oberfläche der Metallelemente mit Keramik zu erzielen.

Davon abgesehen können in bestimmten Bereichen des Keramikkörpers die Metallelemente in einer höheren Dichte eingebracht sein, um bauartbedingte Unterschiede im Aufheizverhalten des Keramikkörpers im Betrieb auszugleichen.

Um ein unterschiedliches Aufheizverhalten des Keramikkörpers zu berücksichtigen, können alternativ auch Metallelemente mit unterschiedlicher Stärke im Keramikkörper angeordnet werden.

Als langgestreckte Metallelemente werden vorzugsweise Drahtabschnitte eingesetzt. Diese sind beim Herstellungsprozess in Form von "Endlos"-Material besonders wirtschaftlich.

Die Metallelemente weisen vorzugsweise einen Durchmesser von 0,2 - 1,0 mm, besonders bevorzugt von 0,4 - 0,6 mm auf, wobei ein runder Querschnitt aus wirtschaftlichen Gründen bevorzugt ist. Den gleichen technischen Zweck erfüllen jedoch auch andere Querschnitte der Metallelemente.

Die Oberfläche der Metallelemente kann je nach den spezifischen Anforderungen des jeweiligen keramischen Körpers glatt oder rau beschaffen sein.

Die langgestreckten Metallelemente reichen vorzugsweise nicht bis zu den Stirnflächen des Keramikkörpers und liegen daher nicht frei.

Die Längen der einzelnen Metallelemente entsprechen vorzugsweise dem 0,8- bis 0,95-fachen der Keramikträgerlänge, wobei mehrere kürzere Metallelemente sich zu einem Metallelement mit vorgenannter Länge "addieren" können. Die kürzeren Metallelemente weisen vorzugsweise das 0,1- bis 0,999-fache der Keramikträgerlänge auf.

Die Kanäle weisen vorzugsweise rechteckige, bevorzugt quadratische oder sechseckige (Honeycomb) Querschnitte auf, wobei die innen liegenden Ecken vorzugsweise abgerundet sind. Die Rundungsradien der vier Ecken können unterschiedlich beschaffen sein, um beispielsweise partiell die Wandungsstärke des Keramikkörpers zu erhöhen, um in diesen Bereichen Metallelemente vorzusehen.

Die Metallteile können grundsätzlich in allen Bereichen in den Wandungen des Keramikkörpers angeordnet sein, also zwischen Kanälen, an den Kreuzungspunkten der Kanäle und den die Außenseite des Keramikkörpers bildenden Wandungen.

Die genaue Verteilung der Metallelemente im Keramikkörper nimmt der Fachmann aufgrund der spezifischen Anforderungen an den jeweiligen Keramikkörper als Katalysatorträger oder Partikelfilter vor.

Vorzugsweise sind die Metallelemente in den Wandungen zwischen zumindest zwei Kanälen und besonders bevorzugt im Kreuzungsbereich der Wandungen vorgesehen und sind somit von vier Kanälen benachbart.

Vorzugsweise sind die Wandungen des Keramikkörpers im Bereich von Metallelementen stets stärker ausgeführt, da somit das relativ dünne keramische Material des Keramikkörpers vorteilhafterweise nicht bei mechanischer Beanspruchung abplatzt oder reißt.

Aus dem gleichen Grund sind die Metallelemente derart in den Keramikkörper eingebettet, dass diese vollständig von der Keramik des Keramikkörpers umgeben sind. Dies führt zudem zu einer relativ gleichmäßige Erhitzung der Keramik.

Vorzugsweise liegen die Metallelemente an mehr als 50 %, mehr bevorzugt 80 %, noch mehr bevorzugt 90 % und am bevorzugtesten 99 % ihrer Oberfläche an der umgebenden Keramik des Keramikkörpers an.

Der Wärmeausdehnungskoeffizient der Metallelemente weicht vorzugsweise um weniger als 30 %, mehr bevorzugt um weniger als 20 %, noch mehr bevorzugt um 10 % und am bevorzugtesten um weniger als 5 % vom dem der umgebenden Keramik des Keramikkörpers ab, um Rissbildungen zu vermeiden.

Durch die erfindungsgemäße Anordnung der Metallelemente in den Wandungen des Keramikkörpers reduziert sich im Vergleich zu einem Keramikkörper nach dem Stand der Technik ohne eingebrachte Metallelemente die freie Stirnfläche der Kanäle vorzugsweise nicht. Unter freier Stirnfläche wird dabei die freie Querschnittsfläche der Kanäle verstanden.

In einer erfindungsgemäßen Ausführung des Keramikkörpers kommt es zu einer Reduzierung der freien Stirnfläche durch die partielle Vergrößerung der Wandstärken, wobei dies derart ausgeführt ist, dass diese sich um weniger als 5 % reduziert. Ferner ist erfindungsgemäß zur Verstärkung des Wandbereichs in den benachbart zum Metallelement liegenden Kanälen eine Einbuchtung eingebracht.

Erfindungsgemäß wird ein Herstellungsverfahren für den erfindungsgemäßen Keramikkörper bereitgestellt, das die Extrusion eines Grundmaterials des Keramikkörpers umfasst, wobei während der Extrusion die Metallelemente in das Material eingebettet werden. Vorzugsweise wird für die Metallelemente Draht verwendet.

Beansprucht wird eine Abgasreinigungseinrichtung, einen vorbeschriebenen Keramikkörper und einen Generator elektromagnetische Felder aufweisend, der vorzugsweise benachbart zum Keramikkörper angeordnet ist, um die Metallelemente induktiv zu heizen.

Die Abgasreinigungseinrichtung weist vorzugsweise eine Abschirmung auf, die derart ausgelegt ist, dass durch den Generator ausschließlich die Metallelemente des Keramikkörpers aufgeheizt werden.

Gegenstand der Erfindung ist ein Fahrzeug mit einem Verbrennungsmotor, dem eine erfindungsgemäße Abgasreinigungseinrichtung oder eine Abgasreinigungsanlage mit einem erfindungsgemäßen Keramikkörper nachgeordnet ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: in einer geschnittenen Detailansicht einen keramischen Filterkörper nach dem Stand der Technik,
- Figur 2: in einer geschnittenen Detailansicht einen keramischen Filterkörper mit einen Teil der Kanäle verschließenden Heizelementen nach dem Stand der Technik,
- Figur 3: in einer geschnittenen, schematischen Detailansicht von vier Kanälen einen erfindungsgemäßen Filterkörper,
- Figur 4: in einer geschnittenen, schematischen Detailansicht einer Mehrzahl von Kanälen einen erfindungsgemäßen Filterkörper gemäß der in Figur 3 gezeigten Ausführungsform,
- Figur 5: in einer geschnittenen, schematischen Detailansicht von vier Kanälen einen erfindungsgemäßen Filterkörper nach einer zweiten Ausführungsform,
- Figur 6: in einer geschnittenen, schematischen Detailansicht von zwei Kanälen einen erfindungsgemäßen Filterkörper nach einer dritten Ausführungsform, und
- Figur 7: in einer längs geschnittenen, schematischen Detailansicht einen keramischen Filterkörper.

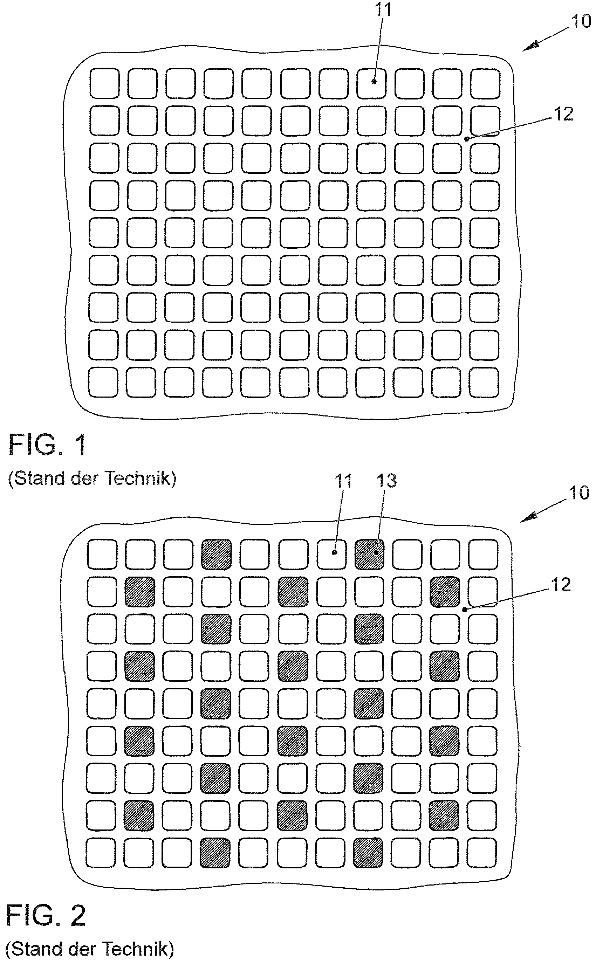

Figur 1 zeigt einen aus dem Stand der Technik bekannten Keramikkörper 10, der als Katalysatorträger und/oder Partikelfilter dienen kann. Der Keramikkörper 10 weist eine Vielzahl von in der geschnittenen Ansicht sichtbaren Kanälen 11 auf, durch die im allgemeinen Abgase eines Verbrennungsmotors geleitet werden, wobei diese katalytisch gereinigt und/oder von Partikeln getrennt werden. Diese Kanäle 11 sind üblicherweise regelmäßig angeordnet und durchdringen den Keramikköper 10 vollständig. Die Kanäle 11 sind von Wandungen 12 aus dem keramischen Material des Keramikkörpers begrenzt. Um den Keramikkörper 10 aus verschiedenen Gründen auf eine vorgegebene Temperatur bringen zu können, können wie in Figur 2 gezeigt in einzelne Kanäle 11 metallische Körper 13 eingebracht werden, die durch Induktion mittels einer hier nicht gezeigten Vorrichtung aufgeheizt werden können. Allerdings reduziert sich dadurch die freie Stirnfläche des Keramikkörpers 10 für den Transport der Abgase, sodass der Keramikkörper 10 bei Verwendung einer derartigen Heizung größer ausgelegt werden muss. Dies ist jedoch nachteilig, da Bauraum im Fahrzeugbau nur stark limitiert zur Verfügung steht.

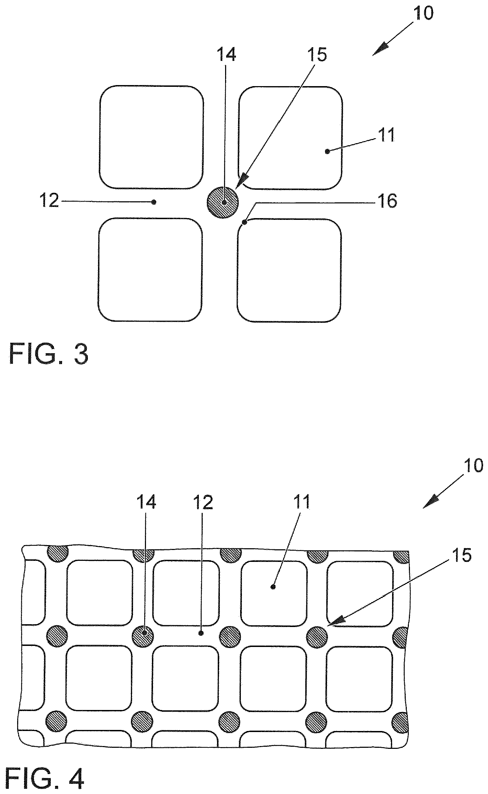

Ein erfindungsgemäßer Keramikkörper 10 wird in den Detailansichten der Figuren 3 bis 7 gezeigt, wobei zur Vereinfachung auf Linien zur Verdeutlichung eines Ausschnitts verzichtet wurde.

Eine erste Ausführungsform des erfindungsgemäßen Keramikkörpers 10 zeigt Figur 3, bei der vier Kanäle 11 angeordnet sind, die durch Wandungen 12 voneinander beabstandet sind. Am Kreuzungspunkt 15 der Wandungen 12 ist ein langgestrecktes Metallelement 14 vorgesehen, von dem nur die Stirnfläche sichtbar ist. Diese Ausführungsform zeigt auch Figur 4, bei der eine Vielzahl von Kanälen 11 und Metallelementen 14 dargestellt ist. Die Metallelemente 14 sind regelmäßig an allen Kreuzungspunkten 15 der Wandungen 12 vorgesehen, sodass der Keramikkörper 10 insgesamt aufgeheizt wird. Um einen Keramikköper 10 ungleichmäßig aufzuheizen, da die spezifischen Anforderungen einer Abgasreinigungsanlage dies erfordern, sind beliebige Verteilungsmuster der Metallelemente denkbar. Ebenso kann bei einer gleichmäßigen Aufheizung die Dichte der verwendeten Metallelemente 14 variiert werden. Da die Metallelemente 14 erfindungsgemäß auch in den Wandungen 12 vorgesehen werden können, die zwischen zwei Kanälen 11 verlaufen oder auch in den Wandungen, die den Keramikkörper 10 begrenzen, sind vielfältige Verteilungsmuster der Metallelemente 14 im Keramikköper 10 realisierbar.

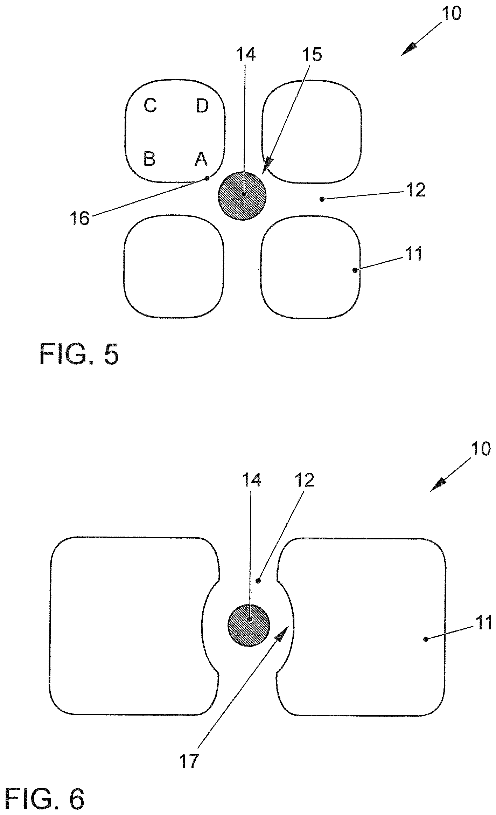

Figur 5 entspricht der Darstellung der Figur 3 mit dem Unterschied, dass die Kanäle 11 Ecken 16 mit einem größeren Rundungsradius A, B, C, D aufweisen, sodass das gezeigte Metallelement 14 einen größeren Durchmesser aufweisen kann, um ein anderes Aufheizverhalten zu erzielen. Durch den größeren Rundungsradius A, B, C, D bleibt die Wandungsstärke der Wandung 12 gleich oder annähernd gleich, sodass die mechanische Stabilität der Wandungen 12 im Vergleich zu den vorgenannten Ausführungsformen erhalten bleibt. Die Rundungsradien A, B, C, D können auch in Abhängigkeit vom Vorhandensein eines Metallelements 14 benachbart zur jeweiligen Ecke 16 unterschiedlich gestaltet sein.

Um bei der Anordnung eines Metallelements 14 in der Wandung 12 zwischen zwei Kanälen 11 (Figur 6) eine bestimmte Wandstärke beziehungsweise entsprechende mechanische Eigenschaften sicherzustellen, ohne die Querschnittsfläche der benachbarten Kanäle 11 zu verringern, kann die Wandung 12 in dem das Metallelement 14 umgebenden Bereich verdickt ausgeformt sein, sodass der entsprechende Kanal 11 benachbart zum Metallelement 14 eine kreissegmentförmige Einbuchtung 17 aufweist. Der Radius dieser Einbuchtung 17 ist variabel, jedoch führt ein zu großer Radius zu einer unvorteilhaften Verringerung der freien Querschnittsfläche des Kanals 11. Das Minimum entspricht dem Radius des Metallelements 14.

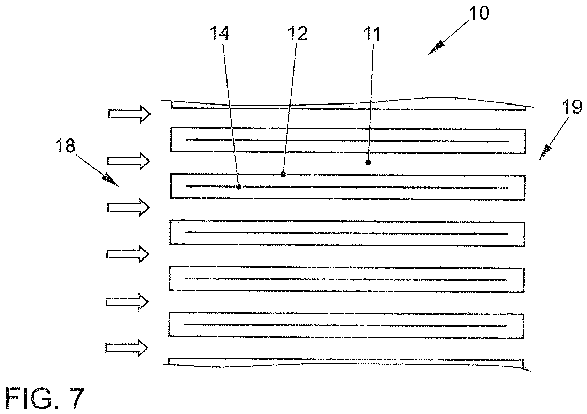

In Figur 7 ist ein erfindungsgemäßer Keramikkörper 10 im Längsschnitt dargestellt, der die Kanäle 11 in ihrer Länge zweigt. Auf einer Eintrittsseite 18 des Keramikkörpers 10 tritt Abgas (symbolisiert durch Pfeile) in die Kanäle 11 ein und verlässt diesen auf der gegenüberliegenden Austrittsseite 19. Während des Transports des Abgases erfolgt dessen Aufreinigung. Die Metallelemente 14 sind in die die Kanäle 11 voneinander trennenden Wandungen 12 eingebettet. Die Metallelemente 14 weisen bei dieser Ausführungsform des Keramikkörpers 100 bedeckte Stirnflächen auf, um Spannungen aufgrund unterschiedlicher Wärmeausdehnungskoeffizienten zu vermeiden. Je nach Herstellungsverfahren und Auslegung des Keramikkörpers 10 können diese auch freiliegen.

### Bezugszeichenliste

- 10: Keramikkörper
- 11: Kanal
- 12: Wandung
- 13: metallischer Körper
- 14: Metallelement
- 15: Kreuzungspunkt
- 16: Ecke
- 17: Einbuchtung
- 18: Eintrittsseite
- 19: Austrittsseite

- A, B, C, D: Rundungsradius

## Patentansprüche

1. Keramikkörper (10), eine Vielzahl von parallel angeordneten Kanälen (11) und eine Vielzahl von parallel zu den Kanälen (11) angeordneten langgestreckten Metallelementen (14) zur induktiven Erhitzung aufweisend, wobei die langgetreckten Metallelemente (14) in den Wandungen (12) des Keramikkörpers (10) angeordnet sind, **dadurch gekennzeichnet, dass** die durch das Einbetten der Metallelemente (14) blockierte Stirnfläche des Keramikkörpers (10) nicht größer ist als 5%, wobei zur Verstärkung des Wandbereichs (12) in den benachbart zum Metallelement (14) liegenden Kanälen (11) eine Einbuchtung (17) eingebracht ist.

2. Keramikkörper (10) nach Anspruch 1, **dadurch gekennzeichnet, dass** die Metallelemente (14) in den Wandungen (12) benachbart zu einem Kanal (11) und/oder zwischen zwei Kanälen (11) und/oder vier Kanälen (11) eingebettet sind.

3. Keramikkörper (10) nach Anspruch 1 oder 2, **dadurch gekennzeichnet, dass** die Metallelemente (14) an mehr als 50 %, vorzugsweise 80 %, besonders bevorzugt 90 % und am meisten bevorzugt 99 %, ihrer Oberfläche an der umgebenden Keramik anliegen.

4. Keramikkörper (10) nach einem der vorhergehenden Ansprüche, **dadurch gekennzeichnet, dass** der Wärmeausdehnungskoeffizient der Metallelemente (14) um weniger als 30 %, vorzugsweise 20 %, besonders bevorzugt 10 % und am meisten bevorzugt 5 %, von dem der umgebenden Keramik abweicht.

5. Keramikkörper (10) nach einem der vorhergehenden Ansprüche, **dadurch gekennzeichnet, dass** die Metallelemente (14) einen Durchmesser von 0,2 - 1,0 mm, vorzugsweise von 0,4 - 0,6 mm, aufweisen.

6. Keramikkörper (10) nach einem der vorhergehenden Ansprüche, **dadurch gekennzeichnet, dass** die Längen der einzelnen Metallelemente (14) dem 0,8- bis 0,95-fachen der Keramikträgerlänge entsprechen, wobei mehrere kürzere Metallelemente (14) rechnerisch zu einem Metallelement (14) zusammengefasst werden können.

7. Keramikkörper (10) nach einem der vorhergehenden Ansprüche, **dadurch gekennzeichnet, dass** die Wandungen (12) des Keramikkörpers (10) im Bereich von Metallelementen (14) eine größere Wandstärke aufweisen als in den anderen Bereichen der Wandung (12).

8. Keramikkörper (10) nach Anspruch 1, **dadurch gekennzeichnet, dass** zur Verstärkung des Wandbereichs (12) der Rundungsradius (A, B, C, D) der benachbart zum Metallelement (14) liegenden Ecke (16) des Kanals oder der Kanäle (11) gegenüber anderen Ecken (16) der Kanäle (11) vergrößert ist.

9. Keramikkörper (10) nach einem der vorhergehenden Ansprüche, **dadurch gekennzeichnet, dass** der Durchmesser der Metallelemente (14) oder die Dichte der vorgesehenen Metallelemente (14) je nach Position in dem Keramikkörper (10) unterschiedlich ist.

10. Abgasreinigungseinrichtung, einen Keramikkörper (10) nach einem der vorherigen Ansprüche und einen Generator für elektromagnetische Felder aufweisend, eingerichtet die Metallelemente (14) induktiv zu erhitzen.

11. Abgasreinigungseinrichtung nach Anspruch 10, **dadurch gekennzeichnet, dass** die Abgasreinigungseinrichtung eine Abschirmung aufweist, die derart ausgelegt ist, dass durch den Generator ausschließlich die Metallelemente (14) induktiv geheizt werden.

12. Verfahren zur Herstellung eines Keramikkörpers (10) nach einem der vorherigen Ansprüche, das die Extrusion eines Grundmaterials des Keramikkörpers (10) umfasst, wobei während der Extrusion die Metallelemente (14) in das Grundmaterial eingebettet werden.

13. Fahrzeug, einen Verbrennungsmotor aufweisend, dem eine Abgasreinigungseinrichtung nach einem der vorherigen Ansprüche oder eine Abgasreinigungsanlage mit einem Keramikkörper (10) nach einem der vorherigen Ansprüche nachgeordnet ist.

## Claims

1. Ceramic body (10) comprising a plurality of channels (11) arranged in parallel and a plurality of elongated metal elements (14) arranged in parallel to the channels (11) for induction heating, wherein the elongated metal elements (14) are arranged in the walls (12) of the ceramic body (10), **characterized in that** the frontal area of the ceramic body (10) blocked by the embedding of the metal elements (14) is not greater than 5%, wherein an indentation (17) is made in the channels (11) arranged adjacent to the metal element (14) in order to reinforce the wall region (12).

2. Ceramic body (10) according to claim 1, **characterised in that** the metal elements (14) are embedded in the walls (12) adjacent to a channel (11) and/or between two channels (11) and/or four channels (11).

3. Ceramic body (10) according to claim 1 or 2, **characterised in that** the metal elements (14) are in contact with the surrounding ceramic on more than 50%, preferably 80%, particularly preferably 90% and most preferably 99%, of their surface.

4. Ceramic body (10) according to any one of the preceding claims, **characterized in that** the coefficient of thermal expansion of the metal elements (14) deviates from that of the surrounding ceramic by less than 30%, preferably 20%, more preferably 10% and most preferably 5%.

5. Ceramic body (10) according to any one of the preceding claims, **characterized in that** the metal elements (14) have a diameter of 0.2 - 1.0 mm, preferably of 0.4 - 0.6 mm.

6. Ceramic body (10) according to one of the preceding claims, **characterised in that** the lengths of the individual metal elements (14) correspond to 0.8- to 0.95 times the ceramic support length, wherein several shorter metal elements (14) can be mathematically combined into one metal element (14).

7. Ceramic body (10) according to one of the preceding claims, **characterised in that** the walls (12) of the ceramic body (10) have a greater wall thickness in the region of metal elements (14) than in the other regions of the wall (12).

8. Ceramic body (10) according to claim 1, **characterised in that**, in order to reinforce the wall region (12), the radius of curvature (A, B, C, D) of the corner (16) of the channel or channels (11) lying adjacent to the metal element (14) is enlarged relative to other corners (16) of the channels (11).

9. Ceramic body (10) according to any one of the preceding claims, **characterized in that** the diameter of the metal elements (14) or the density of the metal elements (14) provided is different depending on the position in the ceramic body (10).

10. Exhaust gas purification device comprising a ceramic body (10) according to any one of the preceding claims and an electromagnetic field generator adapted to inductively heat the metal elements (14).

11. Exhaust gas purification device according to claim 10, **characterised in that** the exhaust gas purification device has a shield which is designed such that only the metal elements (14) are inductively heated by the generator.

12. Method of manufacturing a ceramic body (10) according to any one of the preceding claims, comprising extruding a base material of the ceramic body (10), wherein during the extrusion the metal elements (14) are embedded in the base material.

13. Vehicle comprising an internal combustion engine downstream of which an exhaust gas purification device according to one of the preceding claims or an exhaust gas purification system with a ceramic body (10) according to one of the preceding claims is arranged.

## Revendications

1. Corps céramique (10) présentant une pluralité de canaux (11) disposés parallèlement et une pluralité d'éléments métalliques allongés (14) disposés parallèlement aux canaux (11) pour le chauffage par induction, les éléments métalliques allongés (14) étant disposés dans les parois (12) du corps céramique (10), **caractérisé en ce que** la surface frontale du corps céramique (10) bloquée par l'enrobage des éléments métalliques (14) n'est pas supérieure à 5%, un renfoncement (17) étant réalisé dans les canaux (11) situés au voisinage de l'élément métallique (14) pour renforcer la zone de paroi (12).

2. Corps céramique (10) selon la revendication 1, **caractérisé en ce que** les éléments métalliques (14) sont encastrés dans les parois (12) au voisinage d'un canal (11) et/ou entre deux canaux (11) et/ou quatre canaux (11).

3. Corps céramique (10) selon la revendication 1 ou 2, **caractérisé en ce que** les éléments métalliques (14) sont en contact avec la céramique environnante sur plus de 50 %, de préférence 80 %, de manière particulièrement préférée 90 % et de manière la plus préférée 99 %, de leur surface.

4. Corps céramique (10) selon l'une quelconque des revendications précédentes, **caractérisé en ce que** le coefficient de dilatation thermique des éléments métalliques (14) diffère de celui de la céramique environnante de moins de 30 %, de préférence de 20 %, plus préférentiellement de 10 % et plus préférentiellement de 5 %.

5. Corps céramique (10) selon l'une des revendications précédentes, **caractérisé en ce que** les éléments métalliques (14) ont un diamètre de 0,2 à 1,0 mm, de préférence de 0,4 à 0,6 mm.

6. Corps céramique (10) selon l'une quelconque des revendications précédentes, **caractérisé en ce que** les longueurs des différents éléments métalliques (14) correspondent à la plage de 0,8 à 0,95 fois la longueur du support céramique, plusieurs éléments métalliques (14) plus courts pouvant être réunis par calcul en un seul élément métallique (14).

7. Corps céramique (10) selon l'une des revendications précédentes, **caractérisé en ce que** les parois (12) du corps céramique (10) présentent une épaisseur de paroi plus importante dans la zone des éléments métalliques (14) que dans les autres zones de la paroi (12).

8. Corps céramique (10) selon la revendication 1, **caractérisé en ce que**, pour renforcer la zone de paroi (12), le rayon d'arrondi (A, B, C, D) du coin (16) du canal ou des canaux (11) situé au voisinage de l'élément métallique (14) est agrandi par rapport aux autres coins (16) des canaux (11).

9. Corps céramique (10) selon l'une quelconque des revendications précédentes, **caractérisé en ce que** le diamètre des éléments métalliques (14) ou la densité des éléments métalliques (14) prévus sont différents selon leur position dans le corps céramique (10).

10. Dispositif d'épuration des gaz d'échappement, comprenant un corps céramique (10) selon l'une des revendications précédentes et un générateur de champs électromagnétiques agencé pour chauffer par induction les éléments métalliques (14).

11. Dispositif d'épuration des gaz d'échappement selon la revendication 10, **caractérisé en ce que** le dispositif d'épuration des gaz d'échappement présente un blindage qui est conçu de telle sorte que seuls les éléments métalliques (14) sont chauffés par induction par le générateur.

12. Procédé de fabrication d'un corps céramique (10) selon l'une quelconque des revendications précédentes, comprenant l'extrusion d'un matériau de base du corps céramique (10), dans lequel, pendant l'extrusion, les éléments métalliques (14) sont incorporés dans le matériau de base.

13. Véhicule, présentant un moteur à combustion interne en aval duquel est placé un dispositif de purification des gaz d'échappement selon l'une des revendications précédentes ou un système de purification des gaz d'échappement avec un corps céramique (10) selon l'une des revendications précédentes.
